# EUROPEAN PATENT SPECIFICATION

(11) **EP 1 778 462 B1**
(45) Date of publication and mention of the grant of the patent: **20.02.2008**
(21) Application number: 04763872.1
(22) Date of filing: 05.08.2004
(51) Int. Cl.: B29D 11/00, B29C 33/40

(54) **METHOD FOR MANUFACTURING OPTICAL DEVICES**
VERFAHREN ZUR HERSTELLUNG VON OPTISCHEN VORRICHTUNGEN
PROCÉDÉ DE FABRICATION DE DISPOSITIFS OPTIQUES

(43) Date of publication of application: 02.05.2007
(73) Proprietor: Pirelli & C. S.p.A., 20123 Milano (IT)
(72) Inventor: COLOMBO, Marco, 20126 Milano (IT); OSMOND, Johann, 20126 Milano (IT); ZAOPO, Antonio, 20126 Milano (IT)
(74) Representative: Bottero, Claudio
(86) International application number: PCT/EP2004/008839
(87) International publication number: WO 2006/012915

(56) References cited:
- US-A- 6 156 243
- US-A1- 2004 021 237
- US-B1- 6 517 995
- US-B1- 6 555 288
- HUANG,PALOCZI,SCHEUER,YARIV: "Soft Lithography replication of polymeric microring optical resonators" OPTICS EXPRESS, vol. 11, no. 20, 6 October 2003 (2003-10-06), pages 2452-24558, XP002322007 cited in the application

## Description

### Field of the invention

The present invention relates to a method for manufacturing optical devices. Specifically, the invention relates to a method for manufacturing optical devices comprising polymeric optical waveguides of improved quality in terms of dimensional and shape precision, as well as in terms of low optical loss.

### Prior art

In optical communication systems, messages are transmitted by carrier waves at optical frequencies which are generated by sources such as lasers and light-emitting diodes. There is interest in such optical communication systems because they offer several advantages over conventional communication systems.

One means for switching or guiding waves of optical frequencies from one point to another is by an optical waveguide. The operation of an optical waveguide, in particular, is based on the fact that when a light-transmissive medium (known in the art by the term of core) is surrounded or otherwise bounded by another medium having a lower refractive index (known in the art by the term of cladding), light introduced along the inner medium's axis is reflected at the boundary with the surrounding medium, thus producing a guiding effect. '

A wide variety of optical devices can be made which incorporate a light guiding structure as the light transmissive elements. Such devices comprise, for example, components such as channel optical waveguides, ridge, raised strip, embedded strip, diffused, rib and inverted rib waveguides, optical couplers, optical splitters, optical switches, optical filters, variable attenuators, micro-optical elements and the like, as from US 6,555,288, for example.

Typically, an optical waveguide comprises:
- a support,
- a lower cladding layer formed on the support (the lower cladding layer being optional, depending on the value of the refractive index of the support),
- a core layer formed on the lower cladding layer (if present) or on the support (if this has a refractive index lower than the refractive index of the core), the core layer being provided with a rib portion integral with the core layer, and
- an upper cladding layer formed on the core layer.

Optical waveguides and other optical devices comprising a core and/or cladding layer made of polymeric materials are known. Polymeric materials have properties which can be easily tuned either by the molecular structure design or by doping with other functional materials or by blending different polymeric materials. Polymeric materials can also be easily processed and show excellent mechanical properties including good flexibility.

As reported, for example, by US 6,555,288, most polymeric materials contain carbon-to-hydrogen chemical bonds which absorb strongly at the 1550 nm wavelength, which is the wavelength commonly used in telecommunication applications. Fluoropolymers wherein the carbon-to-hydrogen bond is at least partially substituted by a carbon-to-fluorine bond have significantly reduced absorption at 1550 nm. However, it is relatively difficult to make optical devices from these materials.

One of the most common manufacturing method for optical waveguide employs of the so-called photolithography. Photolithography involves patternwise exposure of a light-sensitive polymeric layer, the core layer, deposited on a support or a lower cladding layer, followed by development of the pattern. Development may be accomplished, for example, by removal of the unexposed portion of the photopolymeric layer by an appropriate solvent and then by different steps of reactive ion etching (R.LE.) on the core layer.

Polyfluoromethacrylates submitted to photolithographic processes including an R.I.E. step also have higher losses at 1550 nm, typically on the order of 0.6 dB/cm

US 6,555,288 reports that waveguides manufactured by photolithography using photopolymerizable compositions of, *inter alia,* fluoroacrylates, suffer from undesirably high optical loss and, in addition, are not sufficiently flexible.

The Applicant perceived that the optical losses in fluorinated polymers can be due to the fact that R.I.E. can yield roughness of the core polymeric surface, and this can results in scattering losses.

Also, the Applicant observed that manufacturing methods including a R.I.E. step provide poor dimensional precision that can contribute to an ensuing increase of the light propagation loss.

On the other side, the use of photolithography as manufacturing method for fluorinated optical waveguide by using solvent is difficult due to the chemical inertia of such polymeric materials.

For solving the above-mentioned drawbacks, the Applicant took into consideration the soft lithography method.

Soft lithography is a manufacturing technique using an elastomeric mold to shape soft materials, as disclosed, for example, by US 6,517,995.

As reported, for example, by Yanyi Huang et al. in "Soft lithography replication of polymeric microring optical resonators", Optics Express, Vol. 11, No. 20 of 6 October 2003, pp. 2452-2458, the elastomeric mold can be made of polydimethylsiloxane (PDMS) due to the relatively low surface energy thereof, which results in a weak adhesion to other materials. This property allows a large number of PDMS molds to be produced from one master device.

A method for manufacturing elastomeric stamps from a stamp master is, for example, described in patent application US 2003/0006527.

Patent application US 2004/0028875 discloses a process for manufacturing, *inter alia,* rib waveguide structures made of fluorinated acrylate. A mold with ridges is casted with polyvinylidene fluoride (PVDF) polymer. Subsequently, the mold is separated from the optical transparent product having rectangular grooves, which is then dried. The product so obtained is provided with a thin cladding layer by dip, spray or spin coating. A core layer is then casted in the grooves. Finally, a second cladding layer of polymethylmethacrylate (PMMA) is coated on the product so provided with the core layer. Alternatively, the optical transparent product is first closed with a cover plate and next the core layer is deposited inside the closed product with a capillary filling technique. US 2004/0028875 discloses a number of treatments which can be applied to the outer or inner surface of the product, such as for example a hydrophilization as well as a hydrophobization by a plasma-treatment carried out on the product.

### Summary of the invention

One major objective of the present invention is that of using fluorinated polymeric materials having low optical losses to manufacture polymeric optical devices, such as for example polymeric optical waveguides, provided with a predetermined pattern, in particular but not exclusively of the rib and inverted rib type, having improved quality in terms of low optical loss, specially with reference to scattering loss, and birefringence.

Although the present description is mainly focused upon the manufacture of rib waveguides, the method according to the present invention may be carried out to manufacture any optical device. In particular, the method may be carried out to manufacture, for example, optical components such as rib and inverted rib waveguides, optical couplers, optical splitters, optical switches, optical filters, variable attenuators, m.icro-optical elements and the like.

Another major objective of the present invention is that of manufacturing a variety of optical devices comprising fluorinated polymeric material by a method involving a soft lithography technique which, as described above, is based on the use of an elastomeric mold and conveniently allows to manufacture a large number of such molds in an easy manner from one master device in few manufacturing steps, i.e. in a relatively short time and, as such, at low cost.

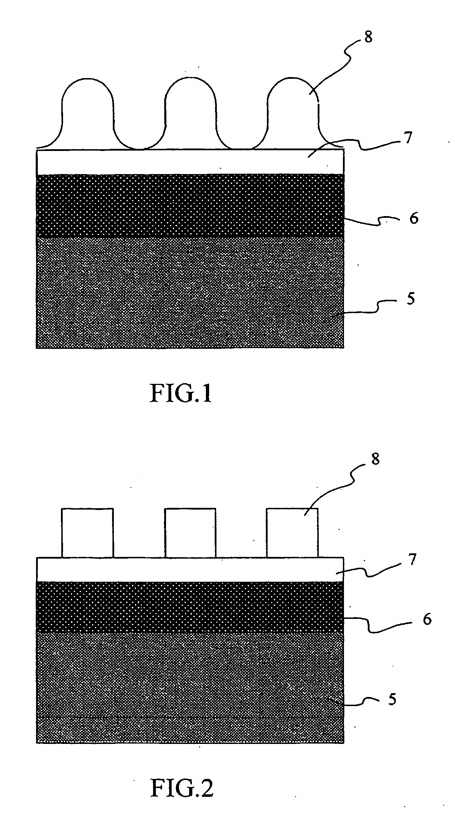

With these two major objectives in mind, however, the Applicant has noticed that fluorinated polymers, such as fluorinated acrylates, although having low optical loss, show nevertheless a poor compatibility with respect to elastomeric molds, such as molds made of PDMS. In particular, in some instances, the Applicant encountered difficulties in removing the elastomeric mold from the imprinted polymer, which resulted in damages to the ribs and/or elastomeric mold residues on the fluorinated polymer. In other instances, a scarce wettability of the polymer resulted in a mold pattern inaccurately replicated, as can be seen from fig. 1, which shows a longitudinal cross-section of a rib optical waveguide made of fluorinated acrylate manufactured by a prior art method based on soft lithography by means of a PDMS mold. As can be seen from such figure, the resulting waveguide ribs appear rounded instead of rectangular.

In order to allow to manufacture polymeric optical devices of improved quality by means of a soft lithography technique, i.e. in order to enable to replicate the pattern of the elastomeric mold on the fluorinated polymeric material in an accurate manner, the Applicant perceived that the elements of the couple polymeric material-elastomeric mold should be reciprocally compatibilized so as to obtain a complete fill of the recessed portions of the elastomeric mold, while allowing, at the same time, an easy and harmless removal of the mold from the imprinted polymer.

The Applicant perceived that the above mentioned problems could be solved by focusing on the elastomeric mold rather than on the fluorinated polymeric material. More particularly, the Applicant perceived that the surface energy of the elastomeric mold intended to get in contact with the polymeric material of the optical device was the key-point for obtaining an advantageously balanced affinity between the elastomeric mold and the polymeric material.

Surprisingly, the Applicant noticed that if the patterned surface of the elastomeric mold to be imprinted on _the polymeric material is preliminary oxidized, for example by means of plasma-treatment, before using the elastomeric mold to pattern the polymeric material, it is advantageously possible to replicate the mold pattern on the polymeric material in an accurate manner, without impairing, at the same time, the subsequent removal of the elastomeric mold from the polymeric material so patterned.

More specifically, the Applicant noticed that an oxidation of the elastomeric mold surface provided with the pattern to be transferred on the polymeric material has the advantageous effect to modify, namely to increase, the surface energy of the elastomeric material of the mold.

In a first aspect, the present invention, as set out in the method of claim 1, therefore relates to a method for manufacturing an optical device comprising at least one fluorinated polymer optical waveguide, said method comprising the steps of:
- providing an elastomeric mold with a patterned surface;
- oxidizing said patterned surface;
- providing a core layer of a fluorinated polymeric material;
- patterning said core layer by means of the oxidized patterned surface; and
- removing said elastomeric mold from said patterned core layer.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

Preferably, the elastomeric mold is made of an elastomeric material such as a curable silicone materials. A preferred curable silicone material is polydimethylsyloxane (PDMS).

According to a preferred embodiment of the method of the invention, the patterned surface of the elastomeric mold, for example intended to form the ribs of an organic optical waveguide, shows recesses in the elastomeric mold. Advantageously, in such manner a rib optical waveguide may be produced.

Alternatively, the patterned surface of the elastomeric mold shows projections protruding from the elastomeric mold. Advantageously, in such manner an inverted rib optical waveguide may be produced.

The elastomeric mold is preferably manufactured by conventional techniques, e.g. by pouring an el.astomeric material in liquid form on a master provided with recesses and/or protrusions corresponding to the ribs of the optical device to be produced. A sheet is preferably leant on the uncured elastomeric material in order to obtain a solid support for the mold, which for example may be made of an inorganic material, such as glass. Finally the elastomeric material is cured.

Advantageously, the oxidizing step is performed so as to penetrate a predetermined thickness of the patterned surface, preferably of the nanometric order.

In the present description and subsequent claims, as oxidizing step is meant a modification of the material by linkage of oxygen ions or oxygen containing moieties.

According to a preferred embodiment of the method of the invention, said oxidizing step of the surface of the mold is carried out by means of a technique selected from plasma-treatment, corona discharge, UV radiation, UV/ozone treatment, ozone treatment.

Preferably, plasma-treatment is used. Said plasma-treatment is preferably carried out using oxygen as reacting gas.

Preferably, the plasma-treatment is carried out by inductive coupled plasma (ICP) obtained by using a reacting gas at a predetermined flow rate.

Preferably, said predetermined flow rate of the reacting gas is of from 50 sccm (standard cubic centimeters per minute) to 100 sccm, more preferably of from 60 sccm to 70 sccm.

Preferably, the above-mentioned ICP is carried out at an ICP power of from 500 W to 1500 W, more preferably of from 800 W to 1000 W.

Preferably, said inductive coupled plasma is carried out at a radio frequency (RF) power of from 50 W to 150 W, more preferably of from 90 W to 100 W.

According to a preferred embodiment of the method of the invention, said inductive coupled plasma is carried out for a time lower than 40 seconds (s), more preferably of from 20 s to 35 s and, still more preferably, of from 25 s to 30 s.

Preferably, said inductive coupled plasma is carried out at a temperature of from -5°C to 10°C, more preferably of from -2°C to 8°C and, still more preferably of from 0°C to 5 C°.

Preferably, said inductive coupled plasma is carried out at a pressure of from 1 Torr to 10 Torr, more preferably of from 2 Torr to 8 Torr and, still more preferably, of from 4 Torr to 6 Torr.

Advantageously, the oxidizing step of the patterned surface of the elastomeric mold is carried out in such a manner as to obtain a contact angle between distilled water and the elastomeric mold lower than a predetermined value, preferably equal to or lower than 40° when measured by the sessile drop technique. The sessile drop technique is a technique involving the use of a microscope intended to acquire an image of a drop of a liquid material (here distilled water) resting on a solid surface (here the elastomeric mold). Such technique is described, for example, by Garbassi F. et al., "Polymer surfaces. From physics to technology" J. Wiley and Sons, Ltd. West Sussex, UK,1994.

The above-mentioned value of contact angle advantageously provides an index of compatibility between the elastomeric mold and the fluorinated polymeric material of the core layer, which is useful for manufacturing an optical device according to the method of the invention. When the contact angle is equal to or lower than 40°, in fact, the pattern provided on the elastomeric material is transferred in an accurate manner to the core layer.

The contact angle is a suitable physical parameter to estimate the ratio between the liquid surface tension of the polymeric material and the solid surface energy of the elastomeric material.

As usual in the art, the contact angle is referred to distilled water. More particularly, the contact angle amounts to the angle defined between the mold surface (i.e. the baseline of a droplet of distilled water resting on the surface of elastomeric material) and the tangent to the droplet boundary passing through the point of intersection with the mold surface. The greatest the contact angle, the smallest the surface energy of the elastomeric mold and the smallest the compatibility between the liquid droplet and the mold. In other words, a droplet with high surface tension resting on a low energy mold tends to form a substantially spherical shape, i.e. a high contact angle. Conversely, when the surface energy of the mold exceeds the liquid surface tension, the droplet tends to form a flatter, lower profile shape, i.e. a low contact angle.

Preferably, said contact angle is of from 0° to 40°.

Still more preferably, said contact angle is of from 10° to 40°.

Advantageously, within such preferred range of values of the contact angle as defined above, an optimized compromise is achieved between an increased wettability of the patterned elastomeric mold by the organic material onto which the pattern is to be transferred and a good releasability of the elastomeric mold from such organic material once the pattern has been transferred thereto.

As the ratio between the liquid surface tension and the mold energy may change when the droplet is dynamic, i.e. when the interface between the droplet and air is moving, two dynamic contact angles may be conveniently defined: an advancing contact angle, i.e. the angle defined as above at the leading side of a droplet being moved, and a receding contact angle, i.e. the angle defined as above at the trailing side of a droplet being moved, which is normally lower than the advancing angle.

In other words, an advancing contact angle is measured when the sessile drop has the maximum volume allowable for the liquid-solid interfacial area: any addition will make the drop expand and increase the liquid-solid interfacial area. This can be thought of as the "wetting angle" because the drop is ready to wet additional area.

The receding angle is the opposite: if any liquid is removed from the drop, the liquid-solid interfacial area will decrease. This can be thought of as the "de-wetting angle".

As a consequence, the advancing contact angle is the largest possible contact angle and the receding angle is the smallest possible contact angle.

More particularly, on the one side, said advancing contact angle, when measured at the leading side of a dynamic drop of distilled water being moved on the oxidized surface of the mold, is preferably reduced of at least 80%, more preferably of at least 90% with respect to the value of the advancing contact angle of the mold before the oxidizing step.

Preferably, the advancing contact angle, referred to distilled water, is of from 15° to 30°.

On the other side, said receding contact angle, when measured at the trailing side of a dynamic drop of distilled water being moved on the oxidized surface of the mold, is preferably reduced of at least 80%, more preferably of at least 90% with respect to the value of the receding contact angle of the mold before the oxidizing step.

Preferably, the receding contact angle, referred to distilled water, is of from 5° to 15°.

The fluorinated polymeric material of the core layer is preferably selected from fluorinated acrylate and methacrylate polymers, fluorinated polyacetates, fluorinated polyesters, fluorinated polystyrene, polyvinylidene fluoride (.PVDF), fluorinated polycarbonates, fluorinated polyimides, fluorinated polyethyleneterephtalates (PET), fluorinated polycyclobutanes, fluorinated polycyanates, or combination thereof.

Preferred fluorinated acrylate and methacrylate polymers according to the invention are selected from fluorinated polymethylmethacrylate, fluorinated polybutylacrylate, fluorinated polyethylexylacrylate, fluorinated polyisodecylacrylate, fluorinated polyhydroxyethylacrylate, fluorinated polyhydroxypropylacrylate, fluorinated poycycloexylactylate, fluorinated polybutane-dioldiacrylate, fluorinated polydiacrylate, fluorinated polyneopentylglycoldiacrylate, fluorinated polydiethyleneglycoldiacrylate, fluorinated polydiethyleneglycoldimethacrylate, fluorinated polyexyanedioldiacrylate.

Said preferred materials advantageously have low optical loss at optical communication wavelength, excellent environmental stability, and have little or no birefringence. As is well known in this art, birefringence is the difference between the refractive index of the transverse electric or TE polarization (parallel to the support surface) and the transverse magnetic or TM polarization (perpendicular to the support surface). Such birefringence is undesirable in that it can lead to optical devices having large polarization dependant losses and increased bit error rates in telecommunication systems.

The core layer can be provided either in direct contact with a support or arranged on a support preliminarily provided with a lower cladding layer of a first polymeric material, which is thus in contact with the fluorinated polymeric material of the core layer.

The core layer or the optional lower cladding layer can be provided on the support in liquid form by different methods known in the art, such as spin coating, dip coating, slot coating, roller coating, doctor blading, liquid casting or the like.

The support can be made of any material suitable to perform a support action for the fluorinated polymeric material to be patterned by means of the elastomeric mold.

Advantageously, the support is made of a material conveniently provided with heat resistance, mechanical strength, elastic modulus and chemical resistance, such as for example a material selected from: polyetherimide, polyimide, polycarbonate, polyurethane.

In order to improve the adhesion of the core layer and of the optional lower cladding layer to the support, the latter may be preliminary cleaned and treated with an adhesion promoter. The support may contain other devices, either topographical features such as grooves or electrical circuits, or electro-optical devices such as laser diodes.

When the core layer is provided in direct contact with the support, the latter is made of a material with a refractive index lower than that of the fluorinated polymeric material.

When the support is provided with a lower cladding layer, the refractive index of the support material becomes irrelevant to the operation of the optical device.

The first polymeric material has a refractive index lower than that of the fluorinated polymeric material. Preferably, said first polymeric material is a fluorinated polymer selected, for example, from the group mentioned above in connection with the fluorinated polymeric material of the core layer.

When the first polymeric material is provided on the support in liquid form, a curing treatment thereof is preferably effected before providing the core layer thereupon. For example, the first polymeric material cm be cured by thermal treatment or; preferably, by actinic radiation, for example UV radiation.

Preferably, the curing is effected substantially in the absence of oxygen, for example under a nitrogen flow, and preferably at room temperature.

Preferably, before providing the lower cladding layer with the core layer, the first polymeric material is oxidized, preferably as detailed hereinbelow. Said oxidizing step advantageously improves the adhesion between the lower cladding layer and the core layer of the optical device.

Preferably, the oxidizing step of the lower cladding layer is performed so as to penetrate a predetermined thickness of the lower cladding layer, preferably of the nanometric order. _

Said oxidizing step of the lower cladding layer is preferably carried out subsequently to the above-mentioned step of curing the lower cladding layer.

Advantageously, the removing step of the method of the invention is preceded or followed by a curing step of the patterned core layer. The curing of the core layer can be effected by thermal treatment or, preferably, by actinic radiation, for example UV radiation. Preferably, such curing is effected substantially in the absence of oxygen, for example under a nitrogen flow, and preferably at room temperature.

Preferably, the method of the invention further comprises an oxidizing step of the core layer, preferably as detailed hereinbelow.

Said step of oxidizing the core layer is preferably carried out on the cured patterned core layer, once the elastomeric mold has been removed from the patterned core layer.

Preferably, such oxidizing step is performed so as to penetrate a predetermined thickness of the core layer, preferably of the nanometric order.

Preferably, the method of the present invention further comprises the step of providing an upper cladding layer of a second polymeric material on the core layer, after the step of removing the elastomeric mold from the patterned core layer.

Said upper cladding layer is preferably provided on the core layer after curing the latter.

Said upper cladding layer can be provided using a known technique, for example one of those listed in connection with the deposition of the core layer ad of the optional lower cladding layer on the support.

Preferably, when the second polymeric material is provided in liquid form, a curing treatment thereof is effected. For example, the second polymeric material can be cured by thermal treatment or, preferably, by actinic radiation, for example UV radiation. Preferably, such curing is effected substantially in the absence of oxygen, for example under a nitrogen flow, and preferably at room temperature.

Advantageously, said second polymeric material has a refractive index lower than that of the fluorinated polymeric material. Preferably, said second polymeric material is a fluorinated polymer selected, for example, from the group mentioned above in connection with the fluorinated polymeric material of the core layer.

Preferably, said first polymeric material and said second polymeric material both belong to a same class of polymers. More preferably, said fluorinated polymeric material, as well as said first and second polymeric material all belong to the same class of fluorinated polymers.

Preferably, said second first polymeric material and said second polymeric material have substantially equal refractive indexes.

Preferably, said first polymeric material and said second polymeric material are equal.

Preferably, the method of the invention further comprises the step of oxidizing said upper cladding layer, preferably as detailed hereinbelow.

In this manner an improved adhesion between the upper cladding layer and a further polymeric material applied thereupon is advantageously achieved. Such further polymeric material can be added, for example, when the optical device comprises a plurality of optical waveguides provided in multilayer arrangement.

Said step of oxidizing the upper cladding layer is preferably carried out on the cured upper cladding layer.

Preferably, the oxidizing steps of the core layer, the upper cladding layer and/or the lower cladding layer are carried out using one of the techniques above listed in connection with the oxidizing step of the patterned surface of the mold. _ Preferably, the oxidizing steps of the core layer, the upper cladding layer and/or the lower cladding layer are carried out by inductive coupled plasma obtained by using a reacting gas, such as oxygen, having a predetermined flow rate.

Preferably, said predetermined flow rate is of from 10 sccm to 50 sccm, more preferably of from 20 sccm to 30 sccm.

Preferably, said inductive coupled plasma is earned out at an ICP power of from 500 W to 1000 W, more preferably of from 600 W to 700 W.

Preferably, said inductive coupled plasma is carried out at a RF power of from 50 W to 150 W, more preferably of from 90 W to 100 W.

Preferably, said inductive coupled plasma is carried out for a time equal to or lower than 20 s, more preferably for from 10 s to 15 s.

Preferably, said inductive coupled plasma is carried out at a temperature of fi-om -5°C to 10°C, more preferably of from 0°C to 5°C.

Preferably, said inductive coupled plasma is carried out at a pressure lower than 10 Torr, more preferably of from 4 Torr to 6 Torr.

The method according to the present invention advantageously allows to manufacture an optical device including at least one optical waveguide in a simple and reproducible manner.

The compatibility achieved between the elastomeric mold and the fluorinated polymeric material to be patterned enables to obtain a patterned core layer with a surface roughness reduced with respect to the roughness of the optical devices obtainable by the prior art methods based on the photolithograpy technique, with a consequent reduction of the optical loss, particularly of the scattering loss.

The method of the invention advantageously allows to produce an organic optical device having high dimensional precision, which advantage is particularly important in the manufacture of rib and inverted rib waveguides, where a precise reproduction of the profile of the ribs is required in order to minimize the optical loss of the optical device.

In addition to the improvement of the quality of the optical device, the method of the invention also enjoys from the advantages deriving from the use of an elastomeric mold, with advantageous reduction in the number of steps and simplification thereof with respect to the etching technique of the prior art.

Furthermore, as described in more detail in the following, the method of the invention advantageously allows to obtain an optical device of the type including a number of superimposed layers, namely a support, an optional lower cladding, a core, and an upper cladding layer, which structure is particularly suitable in forming light guiding structures.

### Brief description of the drawings

Additional features and advantages of the invention will become more readily apparent from the description of some preferred embodiments of a method according to the invention for manufacturing an optical device, made hereafter with reference to the attached drawings in which, for illustrative and not limiting purposes, an optical device at different manufacturing steps of a preferred embodiment of the method of the invention is represented.

In the drawings:
- figure 1 is a longitudinal cross-section of a semi-finished organic optical waveguide manufactured by a prior art method based on soft lithography;
- figure 2 is a longitudinal cross-section of a semi-finished organic optical waveguide manufactured by the method of the invention; and
- figures 3-11 are cross-longitudinal views of as many steps of an embodiment of the method of the invention.

### Detailed description of the preferred embodiments

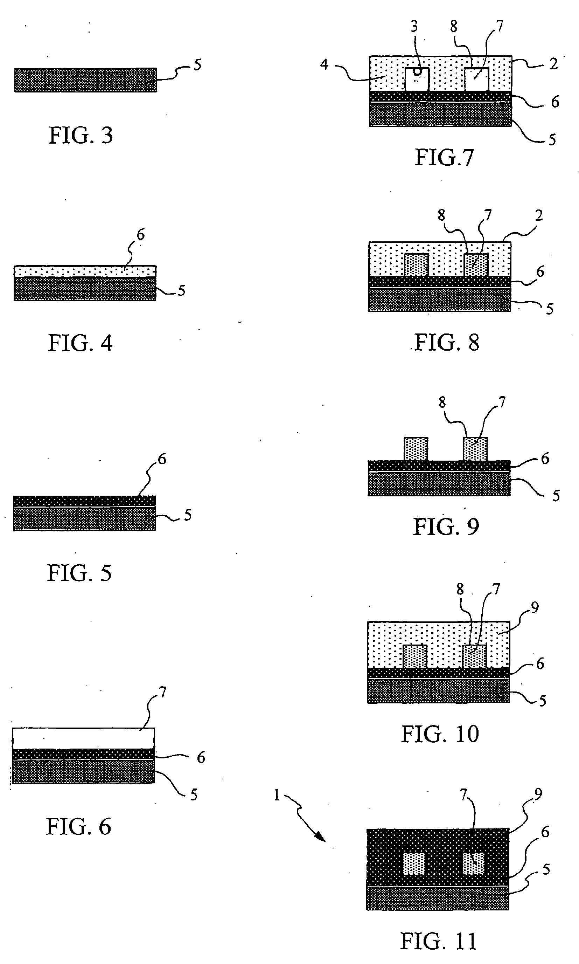

With reference to figures 3-11, a sequence of manufacturing steps of an embodiment of the method of the invention for manufacturing an organic optical device is schematically shown. In figure 11, showing the final step of such preferred embodiment, a finished optical device is generally indicated at 1. By way of illustrative example, in such figure an organic rib optical waveguide is schematically shown.

In a first step of the method of the invention, an elastomeric mold 2 having a predetermined pattern is provided. The elastomeric mold 2, made for example of' polydimethylsiloxane (PDMS), is provided with a predetermined recessed pattern intended to form the ribs of the rib organic optical waveguide. The elastomeric mold 2 (shown in use in figures 7 and 8) is provided with recesses 3 - corresponding to the ribs of the optical device 1 - alternatively arranged between projections 4, which are integrally formed with the elastomeric mold 2 by way of a conventional technique as described in detail in the following.

The elastomeric mold 2 is formed by pouring PDMS in liquid form (for example Sylgard^{®} 184, manufactured by Dow-Corning, Midland, USA), on a master device (not shown as conventional *per se*), made for example of silicon, provided with a pattern comprising projections corresponding to the recesses 3 of the mold 2, which pattern is obtained for example by a standard photolithography technique. An inorganic support sheet, for example made of glass, not shown, is held horizontally by a conventional positioning device and leant by the same on the liquid PDMS. Subsequently, the mold 2 so formed is cured at 80-200°C for 5-120 minutes. The elastomeric mold 2 is then removed by peeling off from the silicon master device and is ready to be used as mold for forming the optical device 1.

Before carrying out the step of oxidizing the patterned surface of the mold 2, as described in the following, the contact angle of Sylgard^{®} 184, referred to distilled water, is of 109°-115° (advancing angle) and of 91°-95° (receding angle), such angles being measured by a microscope according to the sessile drop technique.

In a second step of the method of the invention, the patterned surface of the so-formed elastomeric mold 2 is oxidized. The resulting contact angle, referred to distilled water, is of 17°-21° (advancing angle) and of 11°-15° (receding angle).

For example, the oxidizing step is carried out by inductive coupled plasma in which, as reacting gas, oxygen is preferably used.

A support 5 of polyetherimide (Ultem^{®}, manufactured by Goodfellow Cambridge, Ermine Business Park, Huntingdon, England), is provided (figure 3). As shown in such figure, the support 5 is shaped as a sheet

According to an optional step of the present method, a lower cladding layer 6 of , for example, an UV curable fluorinated acrylate, is provided in liquid form on the support 5 (figure 4), e.g. by spin-coating.

The lower cladding layer 6 is UV cured at 1-5 J/cm² at room temperature, preferably in substantial absence of oxygen, for example under a nitrogen flow (figure 5), then, according to an optional step of the present method, oxidized by inductive coupled plasma obtained by using oxygen.

Subsequently, a core layer 7 of UV curable fluorinated acrylate is provided in liquid form on the lower cladding layer 6 (figure 6), e.g. by spin coating

Subsequently, the core layer 7 is patterned by means of the oxidized elastomeric mold 2 (figure 7), which can be guided against the core layer 7 by a conventional positioning device. In such manner, the core layer 7 is provided with a number of ribs 8 corresponding to the recesses 3 of the elastomeric mold 2.

According to a preferred embodiment of the method of the invention, the core layer 7 is then UV cured through the mold 2 at room temperature and in substantial absence of oxygen, for example under a nitrogen flow (figure 8).

The elastomeric mold 2 is then removed by peeling off from the patterned core layer 7 so cured (figure 9) and may be re-used a number of times to pattern a further core layer of a new optical device being formed.

According to an optional step of the present method, the core layer 7 is preferably oxidized by inductive coupled plasma obtained by using oxygen.

Subsequently, according to a preferred embodiment of the present method, an upper cladding layer 9 of UV curable fluorinated acrylate is provided in liquid form on the patterned core layer 7 (figure 10), e.g. by spin coating. The upper cladding layer 9 is then UV cured at 1-5 J/cm² at room temperature, preferably in substantial absence of oxygen, for example under a nitrogen flow.

In such manner, the finished optical device 1, comprising a core surrounded by a cladding having a lower refractive index, is manufactured (figure 11).

The roughness of the rib optical waveguide so produced may be measured by Atomic Force Microscopy. Specifically, the root mean square (rms) average of the absolute values of the surface height deviations measured from the mean plane may be measured. The rms average roughness of an optical device manufactured according to the method of the invention as described above is comprised in the range 10-15 nm, while the rms average roughness of an optical device manufactured according to a prior art method based on soft lithography, in which no oxidizing step of the elastomeric mold is provided, is comprised in the range 50-80 nm.

The invention is further described by way of the following illustrative examples.

### EXAMPLE 1

### (invention)

### Manufacture of a rib optical waveguide

An organic rib optical waveguide was manufactured as follows.

An elastomeric mold of polydimethylsiloxane (PDMS) having a predetermined pattern, comprising a plurality of rectangular recesses alternatively arranged between projections, was provided. The elastomeric mold was formed by pouring PDMS in liquid form (Sylgard^{®} 184 manufactured by Dow-Corning, Midland, USA), on a master device of silicon provided with a pattern obtained by a photolithography technique. An inorganic support sheet of glass was held horizontally by a positioning device and leant by the same on the liquid PDMS. Subsequently, the elastomeric mold so formed was cured at 150°C for 15 minutes. The elastomeric mold was then removed from the silicon master device.

The dynamic contact angle of Sylgard^{®} 184, referred to distilled water, was measured. The advancing angle was of 112°, while the receding angle was of 93°, such angles being measured by a microscope according to the sessile drop technique.

The elastomeric mold so formed was oxidized. The oxidizing step was carried out by inductive coupled oxygen plasma in which, as reacting gas, oxygen was used. The contact angle between distilled water and the mold was of 20°, the advancing angle was of 19° and the receding angle was of 13°, both referred to distilled water.

The process parameters used in order to perform such oxidizing step of the elastomeric mold were the following:
- oxygen flow rate of 70 sccm;
- ICP power of 1000 W;
- RF power of 100 W;
- time of 30 s;
- temperature of 5°C;
- pressure of 5 Torr.

A support of polyetherimide (Ultem^{®}, manufactured by Goodfellow Cambridge, Ermine Business Park, Huntingdon, England), shaped as a sheet having a thickness of 1.6 mm, was provided.

A lower cladding layer made of UV curable fluorinated acrylate (ZPU 13-430, refractive index = 1.430, manufactured by Zen Photonics Co. Ltd., Moonji-Dong, Yusong-Gu, Daejeon, South Korea) was formed by spin coating on the support and then UV cured by means of a Fusion D lamp (3 J/cm²) at room temperature under a nitrogen flow.

The lower cladding layer was oxidized by inductive coupled oxygen plasma. The process parameters used in order to perform the oxidizing of the lower cladding layer are indicated below.

A core layer of UV curable fluorinated acrylate (ZPU 13-450, refractive index = 1.449, manufactured by Zen Photonics Co. Ltd., Moonji-Dong, Yusung-Gu, Daejeon, South Korea) was formed by spin coating on the lower cladding layer so cured and plasma-treated.

The core layer was then patterned by means of the above-mentioned plasma-treated elastomeric mold and UV cured through the mold by means of a Fusion D lamp (3 J/cm²) at room temperature under a nitrogen flow.

The dimensions of the obtained ribs provided on the core layer was 4x4 µm.

The elastomeric mold was then removed from the patterned core layer so cured.

The core layer was plasma-treated by inductive coupled oxygen plasma. The process parameters used in order to perform the plasma-treatment both of the lower cladding and of the core layer were the following:
- oxygen flow rate of 20 seem;
- ICP power of 700 W;
- RF power of 100 W;
- time of 20 s;
- temperature of 5°C;
- pressure lower of 5 Torr.

An upper cladding layer of UV curable fluorinated acrylate (ZPU 13-430, refractive index = 1.430, manufactured by Zen Photonics Co. Ltd., Moonji-Dong, Yusong-Gu, Daejeon, South Korea) was formed by spin coating on the patterned core layer so plasma-treated.

The upper cladding layer so formed was then UV cured by means of a Fusion D lamp (3 J/cm²) at room temperature under a nitrogen flow.

The longitudinal section of the optical waveguide so produced is illustrated in figure 2, which shows that the ribs of the waveguide were perfectly rectangular.

The roughness of the rib optical waveguide so produced was measured by Atomic Force Microscopy. Specifically, the root mean square (rms) average of the absolute values of the surface height deviations measured from the mean plane was measured. The rms average roughness was of 12.7 nm, with a standard deviation of 3.5 nm.

### EXAMPLE 2

### (comparative example)

### Manufacture of a rib optical waveguide

An organic rib optical waveguide was manufactured as follows.

An elastomeric mold of polydimethylsiloxane (PDMS) having a predetermined pattern was provided as described in Example 1 except for the fact that the mold was not submitted to any oxidizing step.

A support of polyetherimide (Ultem^{®}, manufactured by Goodfellow Cambridge, Ermine Business Park, Huntingdon, England), a lower cladding layer made of UV curable fluorinated acrylate (ZPU 13-430, refractive index = 1.430, manufactured by Zen Photonics Co. Ltd., Moonji-Dong, Yusong-Gu, Daejeon, South Korea), a core layer of UV curable fluorinated acrylate (ZPU 13-450, refractive index = 1.449, manufactured by Zen Photonics Co. Ltd., Moonji-Dong, Yusong-Gu, Daejeon, South Korea), and an upper cladding layer of1N curable fluorinated acrylate (ZPU 13-430, refractive index = 1.430, manufactured by Zen Photonics Co. Ltd., lV.loonji-Dong, Yusong-Gu, Daejeon, South Korea) were subsequently superimposed as described in Example 1. The lower cladding layer and the core layer were submitted to an oxidizing step under the same conditions set in Example I.

The dimensions of the obtained ribs provided on the core layer was 4x4 um.

The longitudinal section of the optical waveguide so produced is illustrated in figure 1, which shows that the ribs of the waveguide were rounded.

The roughness of the rib optical waveguide so produced was measured by Atomic Force Microscopy. The root mean square (rms) average of the absolute values of the surface height deviations measured from the mean plane was measured. The rms average roughness was of 80 nm, with a standard deviation of 3.5 nm.

## Claims

1. Method for manufacturing an optical device comprising at least one fluorinated polymer optical waveguide, said method comprising the steps of:
- providing an elastomeric mold with a patterned surface;
- oxidizing said patterned surface;
- providing a core layer of a fluorinated polymeric material;
- patterning said core layer by means of the oxidized patterned surface; and
- removing said elastomeric mold from said patterned core layer.

2. Method according to claim 1 wherein the elastomeric mold is made of a curable silicone material.

3. Method according to claim 2 wherein the elastomeric mold is made of is polydimethylsyloxane.

4. Method according to claim 1 wherein the oxidizing step is performed so as to penetrate through the patterned surface for a nanometric thickness.

5. Method according to claim 1 wherein the oxidizing step is carried out by means of a technique selected from plasma-treatment, corona discharge, UV radiation, UV/ozone treatment, ozone treatment.

6. Method according to claim 5 wherein the oxidizing step is carried out by plasma treatment.

7. Method according to claim 6 wherein said plasma treatment is carried out using oxygen.

8. Method according to claim 6 wherein said plasma treatment is carried out by inductive coupled plasma.

9. Method according to claim 8 wherein said plasma treatment is carried out at a flow rate of reacting gas is of from 50 sccm to 100 seem.

10. Method according to claim 8 wherein said plasma treatment is carried out at an ICP power of from 500 W to 1500 W.

11. Method according to claim 8 wherein said plasma treatment is carried out at a radio frequency power of from 50 W to 150 W.

12. Method according to claim 8 wherein said plasma treatment is carried out for a time lower than 40 seconds.

13. Method according to claim 8 wherein said plasma treatment is carried out at a temperature of from -5°C to 10°C

14. Method according to claim 8 wherein said plasma treatment is carried out at a pressure of from 1 Ton to 10 Torr.

15. Method according to claim 1 wherein the oxidizing step provides a contact angle between distilled water and the elastomeric mold equal to or lower than 40° when measured by the sessile drop technique.

16. Method according to claim 15 wherein said contact angle is of from 0° to 40°.

17. Method according to claim 16 wherein said contact angle is of from 10° to 40°.

18. Method according to claim 1 wherein the oxidizing step provides an advancing contact angle reduced of at least 80% with respect to the value of the advancing contact angle of the mold before the oxidizing step.

19. Method according to claim 18 wherein the advancing contact angle, referred to distilled water, is of from 15° to 30°.

20. Method according to claim 1 wherein the oxidizing step provides a receding contact angle reduced of at least 80% with respect to the value of the receding contact angle of the mold before the oxidizing step.

21. Method according to claim 20 wherein the receding contact angle, referred to distilled water, is of from 5° to 15°.

22. Method according to claim 1 wherein the fluorinated polymeric material of the core layer is selected from fluorinated acrylate and methacrylate polymers, fluorinated polyacetates, fluorinated polyesters, fluorinated polystyrene, PVDF, fluorinated polycarbonates, fluorinated polyimides, fluorinated polyethyleneterephtalates (PET), fluorinated polycyclobutanes, fluorinated polycyanates, or combination thereof.

23. Method according to claim 22 wherein fluorinated acrylate and methacrylate polymers are selected from fluorinated polymethylmethacrylate, fluorinated polybutylacrylate, fluorinated polyethylexylacrylate, fluorinated polyisodecylacrylate, fluorinated polyhydroxyethylacrylate, fluorinated polyhydroxypropylacrylate, fluorinated poycycloexylacrylate, fluorinated polybutane-dioldiacrylate, fluorinated polydiacrylate, fluorinated polyneopentylglycoldiacrylate, fluorinated polydiethyleneglycoldiacrylate, fluorinated polydiethyleneglycoldimethacrylate, fluorinated polyexyanedioldiacrylate.

24. Method according to claim 1 wherein the core layer is provided in direct contact with a support.

25. Method according to claim 1 wherein the core layer is provided on a support provided with a lower cladding layer of a first polymeric material in contact with the fluorinated polymeric material of the core layer.

26. Method according to claim 24 or 25 wherein the support is made of a material selected from: polyetherimide, polyimide, polycarbonate, polyurethane

27. Method according to claim 25 wherein the first polymeric material is a fluorinated polymer.

28. Method according to claim 27 wherein the fluorinated polymeric material is as from claim 23.

29. Method according to claim 25 wherein first polymeric material is cured substantially in the absence of oxygen.

30. Method according to claim 25 wherein, before providing the lower cladding layer with the core layer, the first polymeric material is oxidized.

31. Method according to claim 30 wherein the oxidizing step is performed so as to penetrate through the lower cladding layer for a nanometric thickness.

32. Method according to claim 1 wherein the removing step is preceded by a curing step of the patterned core layer.

33. Method according to claim 1 wherein the removing step is followed by a curing step of the patterned core layer.

34. Method according to claim 32 or 33 wherein the curing is effected substantially in the absence of oxygen. '

35. Method according to claim 33 wherein an oxidizing step of the core layer is carried out on the cured patterned core layer.

36. Method according to claim 35 wherein the oxidizing step is performed so as to penetrate through the core layer for a nanometric thickness.

37. Method according to claim 1 comprising a step of providing an upper cladding layer of a second polymeric material on the core layer after the step of removing the elastomeric mold from the patterned core layer.

38. Method according to claim 37 wherein said upper cladding layer is provided on the core layer after curing the latter.

39. Method according to claim 37 wherein the second polymeric material is cured in the absence of oxygen.

40. Method according to claim 37 wherein the second polymeric material is a fluorinated polymer as from claim 23.

41. Method according to claims 25 and 37 wherein said first polymeric material and said second polymeric material belong to a same class of polymers.

42. Method according to claims 25 and 37 wherein said fluorinated polymeric material, said first and second polymeric material belong to the same class of fluorinated polymers.

43. Method according to claims 25 and 37 wherein said second first polymeric material and said second polymeric material have refractive indexes substantially equal.

44. Method according to claims 25 and 37 wherein said first polymeric material and said second polymeric material are equal.

45. Method according to claim 37 comprising a step of curing and oxidizing said upper cladding layer.

46. Method according to claim 30, 35 or 45 wherein the oxidizing step is carried out by plasma treatment.

47. Method according to claim 46 wherein the plasma treatment is inductive coupled plasma treatment.

48. Method according to claim 47 wherein the plasma treatment is carried out at a flow rate of from 10 sccm to 50 sccm.

49. Method according to claim 47 wherein the plasma treatment is carried out at an ICP power of from 500 W to 1000 W.

50. Method according to claim 47 wherein the plasma treatment is carried out at a RF power of from 50 W to 150 W.

51. Method according to claim 47 wherein the plasma treatment is carried out for a time lower than 20 seconds.

52. Method according to claim 47 wherein the plasma treatment is carried out at a temperature of from -5°C to 10°C.

53. Method according to claim 47 wherein the plasma treatment is carried out at a pressure lower than 10 Torr.

## Patentansprüche

1. Verfahren zur Herstellung einer optischen Vorrichtung, die mindestens einen Fluorpolymer-Lichtwellenleiter umfaßt, wobei das Verfahren die folgenden Schritte umfaßt:
- Versehen einer elastomeren Form mit einer gemusterten Oberfläche,
- Oxidieren der gemusterter Oberfläche,
- Bereitstellen einer Kernschicht aus einem Fluorpolymermaterial,
- Mustern der Kernschicht mit Hilfe der oxidierten gemusterten Oberfläche und
- Entfernen der elastomeren Form von der gemusterten Kernschicht.

2. Verfahren gemäß Anspruch 1, bei dem die elastomere Form aus einem härtbaren Silikonmaterial hergestellt ist.

3. Verfahren gemäß Anspruch 2, bei dem die elastomere Form aus Polydimethylsiloxan hergestellt ist.

4. Verfahren gemäß Anspruch 1, bei dem der Oxidationsschritt so durchgeführt wird, daß er durch die gemusterte Oberfläche für eine Dicke im Nanometerbereich hindurchdringt.

5. Verfahren gemäß Anspruch 1, bei dem der Oxidationsschritt durchgeführt wird mit Hilfe einer Technik, die ausgewählt ist aus Plasmabehandlung, Koronaentladung, UV-Bestrahlung, UV/Ozonbehandlung, Ozonbehandlung.

6. Verfahren gemäß Anspruch 5, bei dem der Oxidationsschritt durch Plasmabehandlung durchgeführt wird.

7. Verfahren gemäß Anspruch 6, bei dem die Plasmabehandlung unter Verwendung von Sauerstoff durchgeführt wird.

8. Verfahren gemäß Anspruch 6, bei dem die Plasmabehandlung durch induktiv gekoppeltes Plasma durchgeführt wird.

9. Verfahren gemäß Anspruch 8, bei dem die Plasmabehandlung bei einer Flußrate des Reaktionsgases durchgeführt wird, die von 50 bis 100 sccm reicht.

10. Verfahren gemäß Anspruch 8, bei dem die Plasmabehandlung bei einer ICP-Leistung von 500 bis 1.500 W durchgeführt wird.

11. Verfahren gemäß Anspruch 8, bei dem die Plasmabehandlung bei einer Padiofrequenzleistung von 50 bis 150 W durchgeführt wird.

12. Verfahren gemäß Anspruch 8, bei dem die Plasmabehandlung für eine Zeit unter 40 Sekunden durchgeführt wird.

13. Verfahren gemäß Anspruch 8, bei dem die Plasmabehandlung bei einer Temperatur von -5°C bis 10°C durchgeführt wird.

14. Verfahren gemäß Anspruch 8, bei dem die Plasmabehandlung bei einem Druck von 1 bis 10 Torr durchgeführt wird.

15. Verfahren gemäß Anspruch 1, bei dem der Oxidationsschritt einen Kontaktwinkel zwischen destilliertem Wasser und der elastomeren Form gleich oder niedriger als 40° liefert, wenn er durch die Technik an liegenden Tropfen gemessen wird.

16. Verfahren gemäß Anspruch 15, bei dem der Kontaktwinkel von 0 bis 40° ist.

17. Verfahren gemäß Anspruch 16, bei dem der Kontaktwinkel von 10 bis 40° ist.

18. Verfahren gemäß Anspruch 1, bei dem der Oxidationsschritt einen fortschreitenden Kontaktwinkel liefert, der um mindestens 80 % in Bezug auf den Wert des fortschreitenden Kontaktwinkels der Form vor dem Oxidationsschritt verringert ist.

19. Verfahren gemäß Anspruch 18, bei dem der fortschreitende Kontaktwinkel in Bezug auf destilliertes Wasser 15 bis 30° ist.

20. Verfahren gemäß Anspruch 1, bei dem der Oxidationsschritt einen sich zurückziehenden Kontaktwinkel liefert, der um mindestens 80 % in Bezug auf den Wert des sich zurückziehenden Kontaktwinkels der Form vor dem Oxidationsschritt verringert ist.

21. Verfahren gemäß Anspruch 20, bei dem der sich zurückziehende Kontaktwinkel in Bezug auf destilliertes Wasser 5 bis 15° ist.

22. Verfahren gemäß Anspruch 1, bei dem das Fluorpolymermaterial der Kernschicht ausgewählt ist aus fluorierten Acrylat- und Methacrylatpolymeren, fluorierten Polyacetaten, fluorierten Polyestern, fluoriertem Polystyrol, PVDF, fluorierten Polycarbonaten, fluorierten Polyimiden, fluorierten Polyethylenterephthalaten (PET), fluorierten Polycyclobutanen, fluorierten Polycyanaten oder einer Kombination davon.

23. Verfahren gemäß Anspruch 22, bei dem die fluorierten Acrylat- und Methacrylatpolymere ausgewählt sind aus fluoriertem Polymethylmethacrylat, fluoriertem Polybutylacrylat, fluoriertem Polyethylhexylacrylat, fluoriertem Polyisodecylacrylat, fluoriertem Polyhydroxyethylacrylat, fluoriertem Polyhydroxypropylacrylat, fluoriertem Polycyclohexylacrylat, fluoriertem Polybutandioldiacrylat, fluoriertem Polydiacrylat, fluoriertem Polyneopentylglycoldiacrylat, fluoriertem Polydiethylenglycoldiacrylat, fluoriertem Polydiethylenglycoldimethacrylat, fluoriertem Polyhexandioldiacrylat.

24. Verfahren gemäß Anspruch 1, bei dem die Kernschicht in direktem Kontakt mit einem Träger gebildet wird.

25. Verfahren gemäß Anspruch 1, bei dem die Kernschicht auf einem Träger gebildet wird, der mit einer Hüllunterschicht eines ersten Polymermaterials in Kontakt mit dem Fluorpo1ymermateria1 der Kernschicht versehen ist.

26. Verfahren gemäß Anspruch 24 oder 25, bei dem der Träger aus einem Material hergestellt ist, das ausgewählt ist aus Polyetherimid, Polyimid, Polycarbonat, Polyurethan.

27. Verfahren gemäß Anspruch 25, bei dem das erste Polymermaterial ein Fluorpolymer ist.

28. Verfahren gemäß Anspruch 27, bei dem das Fluorpolymermaterial wie aus Anspruch 23 ist.

29. Verfahren gemäß Anspruch 25, bei dem das erste Polymermaterial im wesentlichen in Abwesenheit von Sauerstoff ausgehärtet wird.

30. Verfahren gemäß Anspruch 25, bei dem, bevor die Hüllunterschicht mit der Kernschicht versehen wird, das erste Polymermaterial oxidiert wird.

31. Verfahren gemäß Anspruch 30, bei dem der Oxidationsschritt so durchgeführt wird, daß er durch die Hüllunterschicht für eine Dicke im Nanometerbereich hindurchdringt.

32. Verfahren gemäß Anspruch 1, bei dem dem Schritt des Entfernens ein Aushärtungsschritt der gemusterten Kernschicht vorausgeht.

33. Verfahren gemäß Anspruch 1, bei dem auf den Schritt des Entfernens ein Aushärtungsschritt der gemusterten Kernschicht folgt.

34. Verfahren gemäß Anspruch 32 oder 33, bei dem die Aushärtung im wesentlichen in Abwesenheit von Sauerstoff durchgeführt wird.

35. Verfahren gemäß Anspruch 33, bei dem ein Oxidationsschritt der Kernschicht an der ausgehärteten gemusterten Kernschicht durchgeführt wird.

36. Verfahren gemäß Anspruch 35, bei dem der Oxidationsschritt so durchgeführt wird, daß er durch die Kernschicht für eine Dicke im Nanometerbereich hindurchdringt.

37. Verfahren gemäß Anspruch 1, das einen Schritt umfaßt, bei dem eine Hülloberschicht eines zweiten Polymermaterials nach dem Schritt des Entfernens der elastomeren Form von der gemusterten Kernschicht auf der Kernschicht aufgebracht wird.

38. Verfahren gemäß Anspruch 37, bei dem die Hülloberschicht auf der Kernschicht aufgebracht wird nach dem Aushärten der letzteren.

39. Verfahren gemäß Anspruch 37, bei dem das zweite Polymermaterial in Abwesenheit von Sauerstoff ausgehärtet wird.

40. Verfahren gemäß Anspruch 37, bei dem das zweite Polymermaterial ein fluoriertes Polymer wie aus Anspruch 23 ist.

41. Verfahren gemäß Ansprüchen 25 und 37, bei dem das erste Polymermaterial und das zweite Polymermaterial zu derselben Klasse von Polymeren gehören.

42. Verfahren gemäß Ansprüchen 25 und 37, bei dem das Fluorpolymermaterial, das erste und zweite Polymermaterial zu derselben Klasse von Fluorpolymeren gehören.

43. Verfahren gemäß Ansprüchen 25 und 37, bei dem das zweite erste Polymermaterial und das zweite Polymermaterial Brechungsindizes haben, die im wesentlichen gleich sind.

44. Verfahren gemäß Ansprüchen 25 und 37, bei dem das erste Polymermaterial und das zweite Polymermaterial dasselbe sind.

45. Verfahren gemäß Anspruch 37, das einen Schritt des Aushärtens und Oxidierens der Hülloberschicht umfaßt.

46. Verfahren gemäß Anspruch 30, 35 oder 45, bei dem der Oxidationsschritt durch Plasmabehandlung durchgeführt wird.

47. Verfahren gemäß Anspruch 46, bei dem die Plasmabehandlung induktiv gekoppelte Plasmabehandlung ist.

48. Verfahren gemäß Anspruch 47, bei dem die Plasmabehandlung bei einer Flußrate von 10 bis 50 sccm durchgeführt wird.

49. Verfahren gemäß Anspruch 47, bei dem die Plasmabehandlung bei einer ICP-Leistung von 500 bis 1.000 W durchgeführt wird.

50. Verfahren gemäß Anspruch 47, bei dem die Plasmabehandlung bei einer RF-Leistung von 50 bis 150 W durchgeführt wird.

51. Verfahren gemäß Anspruch 47, bei dem die Plasmabehandlung für eine Zeit unter 20 Sekunden durchgeführt wird.

52. Verfahren gemäß Anspruch 47, bei dem die Plasmabehandlung bei einer Temperatur von -5°C bis 10°C durchgeführt wird.

53. Verfahren gemäß Anspruch 47, bei dem die Plasmabehandlung bei einem Druck von unter 10 Torr durchgeführt wird.

## Revendications

1. Procédé de fabrication d'un dispositif optique comprenant au moins un guide d'onde optique en polymère fluoré, lequel procédé comporte les étapes suivantes :
- prendre un moule en élastomère, doté d'une surface à motif ;
- oxyder cette surface à motif ;
- prendre une couche de coeur en un matériau polymère fluoré ;
- former un motif sur cette couche de coeur, au moyen de la surface à motif oxydée ;
- et séparer ledit moule en élastomère de ladite couche de coeur marquée du motif.

2. Procédé conforme à la revendication 1, dans lequel le moule en élastomère est fait d'un matériau durcissable de type silicone.

3. Procédé conforme à la revendication 2, dans lequel le moule en élastomère est fait de polydiméthylsiloxane.

4. Procédé conforme à la revendication 1, dans lequel l'étape d'oxydation est réalisée de manière à ce que la pénétration à travers la surface à motif s'effectue sur une profondeur nanométrique.

5. Procédé conforme à la revendication 1, dans lequel l'étape d'oxydation est effectuée au moyen d'une technique choisie parmi un traitement par plasma, une décharge corona, une irradiation par UV, un traitement par UV/ozone, et un traitement par ozone.

6. Procédé conforme à la revendication 5, dans lequel l'étape d'oxydation est effectuée par traitement par plasma.

7. Procédé conforme à la revendication 6, dans lequel ledit traitement par plasma est effectué à l'aide d'oxygène.

8. Procédé conforme à la revendication 6, dans lequel ledit traitement par plasma est effectué par plasma à couplage inductif (ICP).

9. Procédé conforme à la revendication 8, dans lequel ledit traitement par plasma est effectué avec un débit d'écoulement du gaz réactif de 50 à 100 ccsm (centimètres-cubes standard par minute).

10. Procédé conforme à la revendication 8, dans lequel ledit traitement par plasma est effectué avec une puissance ICP de 500 à 1500 W.

11. Procédé conforme à la revendication 8, dans lequel ledit traitement par plasma est effectué avec une puissance de radiofréquence de 50 à 150 W.

12. Procédé conforme à la revendication 8, dans lequel ledit traitement par plasma dure moins de 40 secondes.

13. Procédé conforme à la revendication 8, dans lequel ledit traitement par plasma est effectué à une température de -5 à 10 °C.

14. Procédé conforme à la revendication 8, dans lequel ledit traitement par plasma est effectué sous une pression de 1 à 10 torrs.

15. Procédé conforme à la revendication 1, dans lequel l'étape d'oxydation donne un angle de contact entre de l'eau distillée et le moule en élastomère, mesuré par la technique de la goutte sessile, inférieur ou égal à 40°.

16. Procédé conforme à la revendication 15, dans lequel ledit angle de contact vaut de 0° à 40°.

17. Procédé conforme à la revendication 16, dans lequel ledit angle de contact vaut de 10° à 40°.

18. Procédé conforme à la revendication 1, dans lequel l'étape d'oxydation donne un angle de contact avançant de valeur réduite d'au moins 80 % par rapport à la valeur de l'angle de contact avançant du moule avant l'étape d'oxydation.

19. Procédé conforme à la revendication 18, dans lequel l'angle de contact avançant, par rapport à de l'eau distillée, vaut de 15° à 30°.

20. Procédé conforme à la revendication 1, dans lequel l'étape d'oxydation donne un angle de contact reculant de valeur réduite d'au moins 80 % par rapport à la valeur de l'angle de contact reculant du moule avant l'étape d'oxydation.

21. Procédé conforme à la revendication 20, dans lequel l'angle de contact reculant, par rapport à de l'eau distillée, vaut de 5° à 15°:

22. Procédé conforme à la revendication 1, dans lequel le matériau polymère fluoré de la couche de coeur est choisi parmi les polymères d'acrylate ou de méthacrylate fluorés, les polyacétates fluorés, les polyesters fluorés, les polystyrènes fluorés, le PVDF ou poly(fluorure de vinylidène), les polycarbonates fluorés, les polyimides fluorés, les poly(éthylène téréphtalate) fluorés, les polycyclobutanes fluorés et les polycyanates fluorés, ainsi que leurs combinaisons.

23. Procédé conforme à la revendication 22, dans lequel les polymères d'acrylate ou de méthacrylate fluorés sont choisis parmi du poly(méthacrylate de méthyle) fluoré, du poly(acrylate de butyle) fluoré, du poly-(acrylate d'éthyl-hexyle) fluoré, du poly(acrylate d'isodécyle) fluoré, du poly(acrylate d'hydroxyéthyle) fluoré, du poly(acrylate d'hydroxypropyle) fluoré, du poly(acrylate de cyclohexyle) fluoré, du poly(diacrylate de butanediol) fluoré, un polydiacrylate fluoré, du poly(diacrylate de néopentylglycol) fluoré, du poly(diacrylate de diéthylèneglycol) fluoré, du poly(diméthacrylate de diéthylèneglycol) fluoré, et du poly(diacrylate d'hexanediol) fluoré.

24. Procédé conforme à la revendication 1, dans lequel on met la couche de coeur en contact direct avec un support.

25. Procédé conforme à la revendication 1, dans lequel on place la couche de coeur sur un support muni d'une couche inférieure de revêtement en un premier matériau polymère qui se retrouve en contact avec le matériau polymère fluoré de la couche de coeur.

26. Procédé conforme à la revendication 24 ou 25, dans lequel le support est fait d'un matériau choisi parmi les poly(éther imide), polyimides, polycarbonates et polyuréthanes.

27. Procédé conforme à la revendication 25, dans lequel le premier matériau polymère est un polymère fluoré.

28. Procédé conforme à la revendication 27, dans lequel le matériau polymère fluoré est de ceux qui sont cités dans la revendication 23.

29. Procédé conforme à la revendication 25, dans lequel on fait durcir le premier matériau polymère, pratiquement en l'absence d'oxygène.

30. Procédé conforme à la revendication 25, dans lequel, avant de placer la couche de coeur sur la couche inférieure de revêtement, on oxyde le premier matériau polymère.

31. Procédé conforme à la revendication 30, dans lequel l'étape d'oxydation est réalisée de manière à ce que la pénétration à travers la couche inférieure de revêtement s'effectue sur une profondeur nanométrique.

32. Procédé conforme à la revendication 1, dans lequel l'étape de séparation est précédée d'une étape dans laquelle on fait durcir la couche de coeur marquée du motif.

33. Procédé conforme à la revendication 1, dans lequel l'étape de séparation est suivie d'une étape dans laquelle on fait durcir la couche de coeur marquée du motif.

34. Procédé conforme à la revendication 32 ou 33, dans lequel c'est pratiquement en l'absence d'oxygène que l'on opère le durcissement.

35. Procédé conforme à la revendication 33, dans lequel on soumet la couche de coeur marquée du motif et durcie à une étape d'oxydation de la couche de coeur.

36. Procédé conforme à la revendication 35, dans lequel l'étape d'oxydation est réalisée de manière à ce que la pénétration à travers la couche de coeur s'effectue sur une profondeur nanométrique.

37. Procédé conforme à la revendication 1, qui comporte, après l'étape de séparation du moule en élastomère et de ladite couche de coeur marquée du motif, une étape où l'on met en place, sur la couche de coeur, une couche supérieure de revêtement en un deuxième matériau polymère.

38. Procédé conforme à la revendication 37, dans lequel c'est après avoir fait durcir la couche de coeur qu'on met en place, sur cette dernière, ladite couche supérieure de revêtement.

39. Procédé conforme à la revendication 37, dans lequel on fait durcir le deuxième matériau polymère, en l'absence d'oxygène.

40. Procédé conforme à la revendication 37, dans lequel le deuxième matériau polymère est l'un des polymères fluorés cités dans la revendication 23.

41. Procédé conforme aux revendications 25 et 37, dans lequel ledit premier matériau polymère et ledit deuxième matériau polymère font partie de la même classe de polymères.

42. Procédé conforme aux revendications 25 et 37, dans lequel ledit matériau polymère fluoré et lesdits premier et deuxièmes matériaux polymères font partie de la même classe de polymères fluorés.

43. Procédé conforme aux revendications 25 et 37, dans lequel ledit premier matériau polymère et ledit deuxième matériau polymère ont des indices de réfraction sensiblement égaux.

44. Procédé conforme aux revendications 25 et 37, dans lequel ledit premier matériau polymère et ledit deuxième matériau polymère sont équivalents.

45. Procédé conforme à la revendication 37, qui comporte une étape de durcissement et d'oxydation de ladite couche supérieure de revêtement.

46. Procédé conforme à la revendication 30, 35 ou 45, dans lequel l'étape d'oxydation est réalisée par traitement par plasma.

47. Procédé conforme à la revendication 46, dans lequel le traitement par plasma est un traitement par plasma à couplage inductif.

48. Procédé conforme à la revendication 47, dans lequel ledit traitement par plasma est effectué avec un débit de 10 à 500 ccsm.

49. Procédé conforme à la revendication 47, dans lequel ledit traitement par plasma est effectué avec une puissance ICP de 500 à 1000 W.

50. Procédé conforme à la revendication 47, dans lequel ledit traitement par plasma est effectué avec une puissance de radiofréquence de 50 à 150 W.

51. Procédé conforme à la revendication 47, dans lequel ledit traitement par plasma dure moins de 20 secondes.

52. Procédé conforme à la revendication 47, dans lequel ledit traitement par plasma est effectué à une température de -5 à 10 °C.

53. Procédé conforme à la revendication 47, dans lequel ledit traitement par plasma est effectué sous une pression inférieure à 10 torrs.
